# EUROPEAN PATENT APPLICATION

(11) **EP 1 148 214 A1**
(43) Date of publication of application: **24.10.2001**
(21) Application number: 01109600.5
(22) Date of filing: 18.04.2001
(51) Int. Cl.: F01M 1/02, F16N 13/20

(54) **Internal combustion engine with an oil pump**

(30) Priority: 18.04.2000 JP 2000116910
(71) Applicant: YAMAHA HATSUDOKI KABUSHIKI KAISHA, Iwata-shi Shizuoka-ken (JP)
(72) Inventor: Kinoshita, Yuji, c/o Yamaha Hatsudoki K.K., Iwata-Shi, Shizuoka-ken (JP); Takano, Tomotaka, c/o Yamaha Hatsudoki K.K., Iwata-Shi, Shizuoka-ken (JP); Kitagawa, Yukihiro, c/o Yamaha Hatsudoki K.K., Iwata-Shi, Shizuoka-ken (JP)
(74) Representative: Grünecker, Kinkeldey, Stockmair & Schwanhäusser Anwaltssozietät

(57) **Abstract**

Internal combustion engine with an oil pump and an auxiliary device drive pulley both driven by a crankshaft of said engine, wherein said auxiliary device drive pulley surrounds said oil pump

## Description

This invention relates to an internal combustion engine with an oil pump.

While the oil pump for positively circulating lubrication oil within an engine is driven to rotate by means of the crankshaft or the power of the engine operating in interlocked motion with the crankshaft, the oil pump is mostly laid out inside the main body of the engine. In another aspect, a relief valve for restricting the pressure of lubrication oil delivered from the oil pump below a specified value is placed within the oil pump as a common practice.

A problem associated with laying out the oil pump within the engine main body as has been generally done is that the overall length of the engine increases by the length of the oil pump.

Another problem associated with laying out the relief valve within the oil pump is the increase in the pump size, which also results in the increase in the engine size.

It is an objective of the present invention to provide an internal combustion engine with an oil pump having a compact structure.

According to the present invention said objective is solved by an internal combustion engine with an oil pump and an auxiliary device drive pulley both driven by a crankshaft of said engine, wherein said auxiliary device drive pulley surrounds said oil pump.

Advantageously, such an engine can be made compact by reducing its overall length.

Preferred embodiments of the present invention are laid down in further dependent claims.

In the following, the present invention is explained in greater detail with respect to a preferred embodiment in conjunction with the accompanying drawings, wherein:
- FIG. 1: shows a front sectional view of an internal combustion engine 1 employing an oil pump according to the embodiment
- FIG. 2: is an oblique view of the front cover;
- FIG. 3: is a front view of the oil pump portion of the engine;
- FIG. 4: shows the section A-A of FIG. 3;
- FIG. 5: shows the section B-B of FIG. 3; and
- FIG. 6: shows the section C-C of FIG. 3.

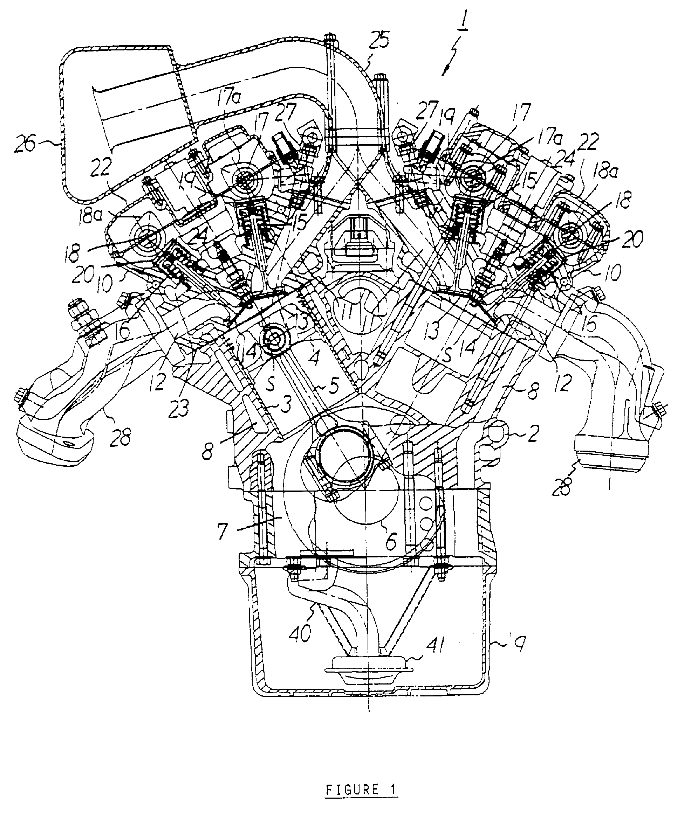

FIG. 1 shows a front sectional view of an internal combustion engine 1 employing the oil pump according to the embodiment. The internal combustion engine 1 is an automobile-purpose, water-cooled, four-stroke cycle, V-type, eight-cylinder engine. A cylinder block 2 of the engine 1 is provided with four cylinders in each of two rows in a V-shape, with the cylinders arranged side by side, increasing their number in the direction perpendicular to the drawing sheet surface. In each cylinder is formed a cylinder bore 3 with a piston 4 inserted for free sliding in the cylinder bore 3. The pistons 4 are respectively connected through connecting rods 5 to a crankshaft 6. The crankshaft 6 is disposed within a crank chamber 7 to extend along the direction normal to the surface of FIG. 1. Linear reciprocal movements of the pistons 4 are converted through the connecting rods 5 to the rotary motion of the crankshaft 6. A water jacket 8 for coolant water to flow through is formed around the cylinder bores 3 in the cylinder block 2.

An oil pan 9 covers from under the cylinder block 2. The top portions of the V-shaped cylinder rows of the cylinder block 2 are respectively covered with cylinder heads 10. Each cylinder head 10 is provided with intake passages 11, one for each cylinder, inside the V shape. Exhaust passages 12, one for each cylinder, are formed outside the V shape. The intake passages 11 and the exhaust passages 12 are respectively opened and closed with intake and exhaust valves 13 and 14 according to appropriate timing to exchange gas in the cylinder bores 3.

Namely, the intake and exhaust valves 13 and 14 are inserted for free sliding in the cylinder head 10 and constantly urged toward closing side with valve springs 15 and 16.

An intake camshaft 17 and an exhaust camshaft 18 are placed on the intake side and the exhaust side of the top surface of the cylinder head 2, rotatably, parallel to each ether, and extending in the (vehicle's width) direction perpendicular to the drawing sheet surface. The intake camshaft 17 and the exhaust camshaft 18 respectively have integrally formed intake cams 17a and exhaust cams 18a in contact with valve lifters 19 and 20 respectively covering the top ends of the intake and exhaust valves 13 and 14. A head cover 22 is placed over each of the cylinder heads 10.

As the V-type multi-cylinder engine 1 is started and the crankshaft 6 is drive to rotate, the rotation of the crankshaft 6 is transmitted to both of the intake and exhaust camshafts 17 and 18, and the intake and exhaust camshafts 17 and 18 are driven to rotate. Then, the intake and exhaust cams 17a and 18a formed on those camshafts push the valve lifters 19 and 20 against the urging forces of the valve springs 15 and 16 to push-open the intake valves 13 and the exhaust valves 14, so that gas is exchanged in each cylinder bore 3 as required.

A water jacket 23 for coolant water to flow through is formed around the intake passage 11 and the exhaust passage 12. An ignition plug 24 is screw-attached to each cylinder head 10, in a peak position of the cylinder. The fore-end, electrode portion of each ignition plug 24, is located in the peak part of each combustion chamber S.

The intake passages 11, one for each cylinder, formed in both of the cylinder heads 10 are connected to an intake manifold 25. One end of the intake manifold 25 is open in a surge tank 26. On the intake side of each cylinder head 10 are attached injectors 27, one for each cylinder, for injecting fuel. The fuel injection nozzle (not shown) formed at the fore-end of each injector 27 is open to each intake passage 11. Though not shown, a throttle body and an air cleaner are connected to the surge tank 26. The throttle body has a built-in throttle valve to be opened and closed as an accelerator is operated.

The exhaust passages 12, one for each cylinder, formed in both of the cylinder heads 10, are connected to an exhaust manifold 28.

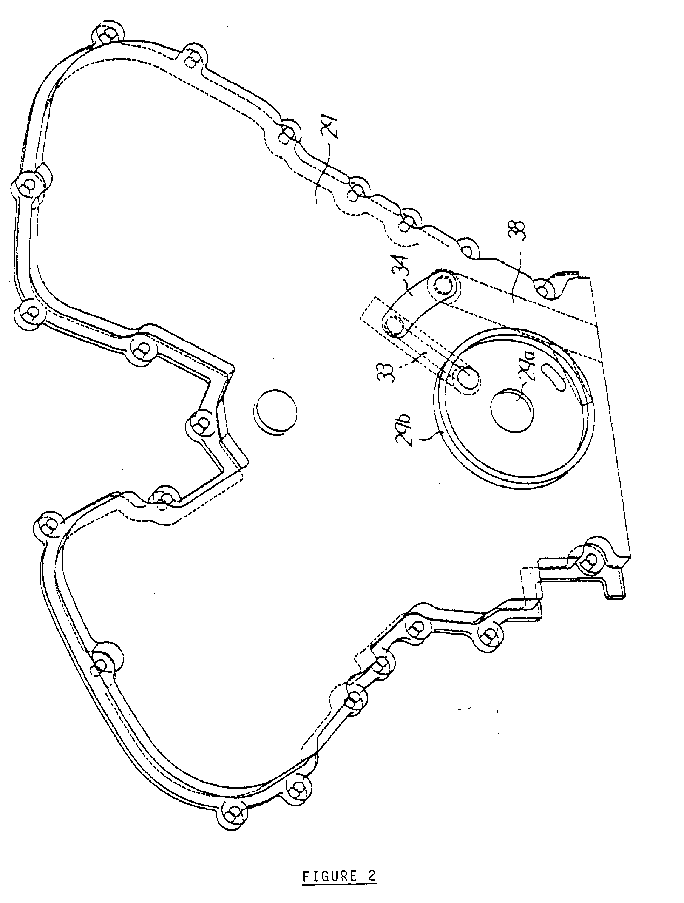

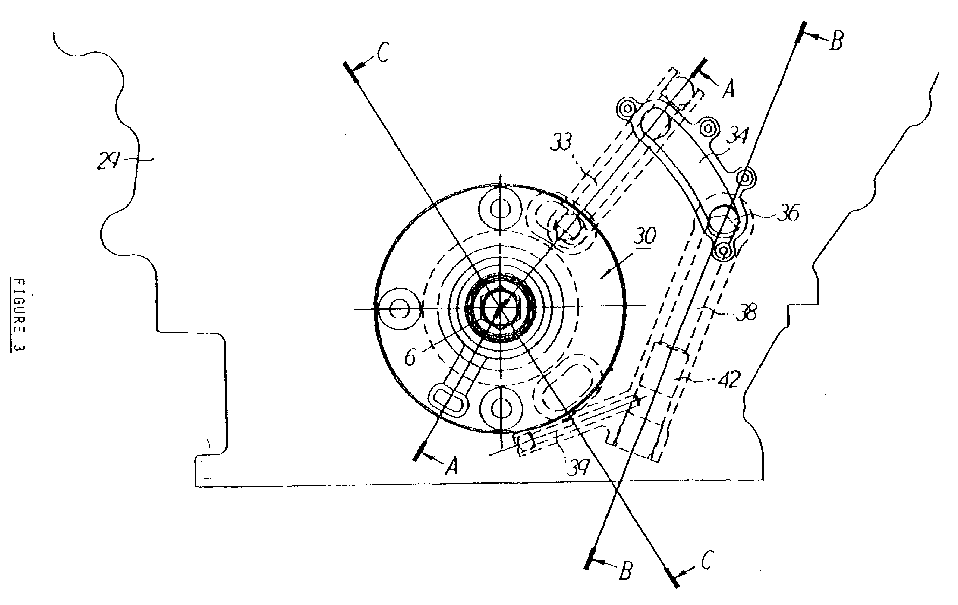

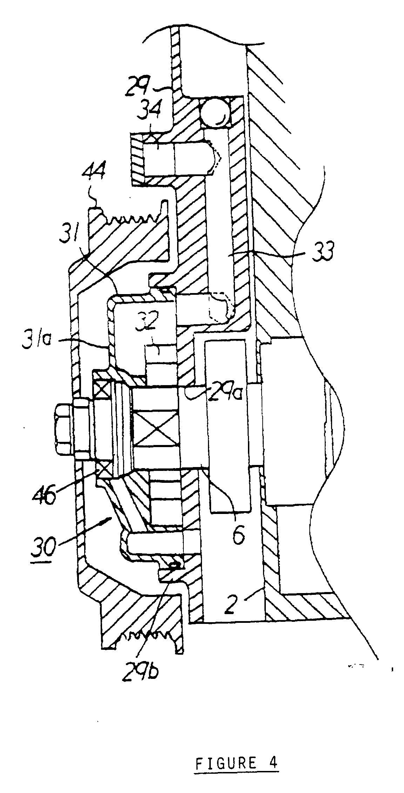

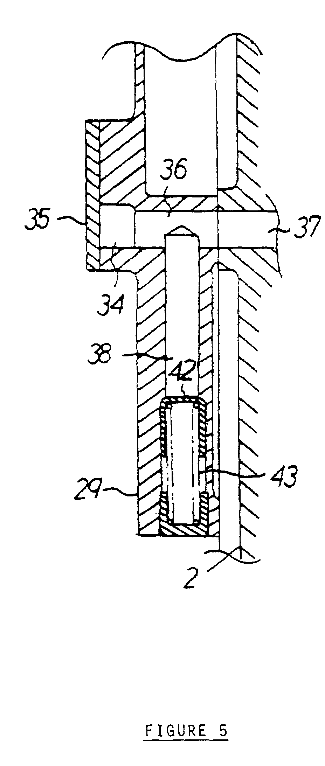

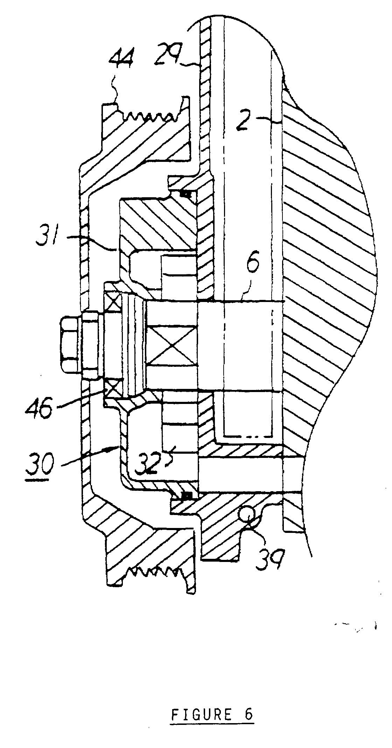

The engine with the oil pump and the layout structure thereof of this embodiment is described below in reference to FIGs. 2 to 6. FIG. 2 is an oblique view of the front cover. FIG. 3 is a front view of the oil pump portion of the engine. FIG. 4 shows the section A-A of FIG. 3. FIG. 5 shows the section B-B of FIG. 3. FIG. 6 shows the section C-C of FIG. 3.

A front cover 29 shown in FIG. 2 is placed over the front side end face of the V-type multi-cylinder engine 1 related to this embodiment. A circular hole 29a is formed in the lower part in the width center of the front cover 29. A circular, raised portion 29b is formed integrally with the outside surface around the hole 29a.

As shown in FIGs. 4 and 6, one end on the front side of the crankshaft 6 passes though the circular hole 29a formed in the front cover 29. An oil pump 30 is attached to the end portion of the crankshaft 6, extending out of the front cover 29. The oil pump 30 of the trochoid type comprises a rotor 32 housed in a housing 31. Here, the housing 31 is made up of the raised portion 29b and a cover 31a fitted and fixed to the raised portion 29b. The rotor 32 is attached to the end portion of the crankshaft 6.

As shown in FIG. 5, an oil passage 34 is in fluid connection to an oil passage 36 formed in the front cover 29, to an oil passage 37 formed in the cylinder block 2, and a relief passage 38 formed in the front cover 29. As shown in FIG. 3, a small-diameter relief passage 39 branches off from the midway of the relief passage 38 and is in fluid connection to a suction port of the oil pump 30. An oil suction pipe 40 placed in the oil pan 9 shown in FIG. 1 is connected to the suction port of the oil pump 30. An oil strainer 41 is attached to an end of the oil suction pipe 40.

In this embodiment, as shown in FIG. 5, a relief valve 42 made separately from the oil pump 30 is removably installed in the relief passage 38 formed in the front cover 29. The relief valve 42 is constantly urged in the closing direction with a spring 43.

As shown in FIGs. 4 and 6, a pulley 44 for driving auxiliary devices is attached to one end of the crankshaft 6, with the one end passing through and projecting out of the housing 31 of the oil pump 30. An endless belt (not shown) is routed around between the pulley 44 for driving auxiliary devices and another pulley (not shown) for driving the same auxiliary devices. The part of the housing 31 of the oil pump 30 where the crankshaft 6 passes through is sealed with a sealing member 46.

As shown also in FIGs. 4 and 6, a hollow space is formed in the pulley 44 for driving auxiliary devices in which space the oil pump 30 is housed, so that the rotor 32 of the oil pump 30 overlaps, as seen in side view of the crankshaft, with the pulley 44 for driving auxiliary devices.

As the crankshaft 6 is driven to rotate, the oil pump 30 is driven directly with the crankshaft 6, lubricant oil collected in the bottom portion of the oil pan 9 is filtered and cleaned through the oil strainer 41, drawn through the oil suction pipe 40 into the oil pump 30, with its pressure raised to a specified value with the oil pump 30, and delivered through a delivery port to an oil passage 33. The lubricant oil delivered to the oil passage 33 is supplied through oil passages 34, 36, and 37 to the engine main body to lubricate various parts of the engine, and returned to the oil pan 9. Thereafter, the above process is repeated, so that lubricant oil is forced to circulate through the engine main body and lubricate various parts of the engine. When the pressure of lubricant oil delivered from the oil pump 30 exceeds a specified value, part of the lubricant oil under pressure push-opens the relief valve 42 against the urging force of the spring 43. Then, since the lubricant oil is partially returned through the relief passages 38 and 39 to the suction side of the oil pump 30, pressure of lubricant oil is restricted below a specified value.

In this embodiment described above, since the oil pump 30 is located between the auxiliary devices driving pulley 44 and the front cover 29 so that the rotor 32 of the oil pump 30 overlaps, as seen in side view of the crankshaft, with the pulley 44, the overall length of the engine 1 is made shorter by the overlapping dimension to make the engine 1 compact.

Since part of the housing 31 of the oil pump 30 is constituted with the recess 29b formed integrally with the front cover 29, the number and weight of parts are reduced.

Further in this embodiment, since the relief valve 42 is formed separately from the oil pump 30 and placed in the relief passage 38 formed in the front cover 29, the length of the oil pump 30 is shortened and accordingly the overall length of the engine 1 is made shorter to reduce the size of the engine 1.

While the above-described embodiment is a V-type, eight-cylinder, automobile engine in particular, the invention is similarly applicable to other engines of any types and purposes.

As is clear from the above description of the embodiment, in an internal combustion engine with an auxiliary device drive pulley attached to one end of the crankshaft projecting out of the engine main part, an oil pump is attached to the crankshaft between the auxiliary device drive pulley and the engine main body so that the oil pump rotor overlaps with the auxiliary device drive pulley as seen in the direction at right angles to the crankshaft. As a result, an effect is provided that the overall length of the engine is made shorter to reduce the size of the engine. Since oil pump is installed in a position on the crankshaft between the auxiliary device drive pulley and the main body of the engine, and the oil pump rotor and the auxiliary device drive pulley are placed to overlap with each other as seen in the side view of the crankshaft, the engine is made compact by the overlapping dimension.

The housing of the oil pump is constituted with part of a front cover which covers one end side of the main part of the engine, on which end side is located the oil pump. Since the housing of the oil pump is constituted with part of the front cover which covers one end side of the main part of the engine where the oil pump is located, the number and weight of parts are reduced.

A relief valve is constituted separately from the oil pump and located in the front cover. Since the relief valve is constituted separately from the oil pump and located in the front cover, the length of the oil pump which is determined with the thickness of the relief valve is reduced, and the overall length of the engine is reduced by the reduction in the thickness of the relief valve.

The embodiment described above teaches an internal combustion engine with an oil pump 30 and an auxiliary device drive pulley 44 both driven by a crankshaft 6 of said engine, wherein said auxiliary device drive pulley 44 surrounds said oil pump 30.

Said oil pump 30 and said auxiliary device drive pulley 44 are provided on an end section the crankshaft 6. A part of said crankshaft 6 extends through said oil pump 30 and said auxiliary device drive pulley 44 is attached to said part of the crankshaft 6. Said oil pump 30 is provided with an oil pump rotor 32. Said oil pump rotor 32 and said auxiliary device drive pulley 44 are overlapping with each other in axial direction of the crankshaft 6.

The oil pump rotor 32 is coaxially attached to the crankshaft 6 and said auxiliary device drive pulley 44 is coaxially attached to the crankshaft 6.

Said auxiliary device drive pulley 44 is provided with a recess, wherein said oil pump 30 is positioned within said recess.

A cover 29 is provided an end side of said engine. Said cover 29 partly constitutes a housing of the oil pump 30. Said cover 29 is provided with a raised portion 29b and a housing cover 31 a of the oil pump 30 is fitted to said raised portion 29b constituting the housing of the oil pump 30. Said oil pump 30 is connected to an oil passage means 33, 34, 36, 38, 39 provided on said cover 29. A relief valve 42 for the oil pump 30 is located in the cover 29.

## Claims

1. Internal combustion engine with an oil pump (30) and an auxiliary device drive pulley (44) both driven by a crankshaft (6) of said engine, wherein said auxiliary device drive pulley (44) surrounds said oil pump (30).

2. Internal combustion engine according to claim 1, **characterized in that** said oil pump (30) and said auxiliary device drive pulley (44) are provided on an end section the crankshaft (6).

3. Internal combustion engine according to claim 1 or 2, **characterized in that** a part of said crankshaft (6) extends through said oil pump (30) and said auxiliary device drive pulley (44) is attached to said part of the crankshaft (6).

4. Internal combustion engine according to at least one of the claims 1 to 3, **characterized in that** said oil pump (30) is provided with an oil pump rotor (32), wherein said oil pump rotor (32) and said auxiliary device drive pulley (44) are overlapping with each other in axial direction of the crankshaft (6).

5. Internal combustion engine according to at least one of the claims 1 to 4, **characterized in that** the oil pump rotor (32) is coaxially attached to the crankshaft (6) and said auxiliary device drive pulley (44) is coaxially attached to the crankshaft (6).

6. Internal combustion engine according to at least one of the claims 1 to 5, **characterized in that** said auxiliary device drive pulley (44) is provided with a recess, wherein said oil pump (30) is positioned within said recess.

7. Internal combustion engine according to at least one of the claims 1 to 6, **characterized in that** a cover (29) is provided on an end side of said engine, wherein said cover (29) partly constitutes a housing of the oil pump (30).

8. Internal combustion engine according to claim 7, **characterized in that** said cover (29) is provided with a raised portion (29b) and a housing cover of the oil pump (30) is fitted to said raised portion (29b) constituting the housing of the oil pump (30).

9. Internal combustion engine according to claim 7 or 8, **characterized in that** said oil pump (30) is connected to an oil passage means (33, 34, 36, 38, 39) provided on said cover (29).

10. Internal combustion engine according to at least one of the claims 7 to 9, **characterized in that** a relief valve (42) for the oil pump (30) is located in the cover (29).
